# EUROPEAN PATENT APPLICATION

(11) **EP 4 197 987 A2**
(43) Date of publication of application: **21.06.2023**
(21) Application number: 22212631.0
(22) Date of filing: 09.12.2022
(51) Int. Cl.: C04B 35/634, C04B 35/80, C04B 35/628, C04B 35/638

(54) **PVA BASED BINDER APPLICATION FOR CMCS**

(30) Priority: 20.12.2021 US 202117556596
(71) Applicant: Raytheon Technologies Corporation, Farmington, CT 06032 (US)
(72) Inventor: KONOPASKE, Zachary P., East Hartford, 06118 (US); READ, Kathryn S., East Hartford, 06118 (US); LAZUR, Andrew J., East Hartford, 06118 (US)
(74) Representative: Dehns

(57) **Abstract**

A method of forming a ceramic matrix composite includes applying a binder comprising water and 5% to 15% polyvinyl alcohol to a ceramic material and decomposing the binder to leave behind a discontinuous carbon layer within the ceramic material. The step of applying the binder includes one of a spraying, pipetting, painting, immersing, and pre-pregging technique.

## Description

### BACKGROUND

The present invention relates to ceramic matrix composites and, more particularly, to woven ceramic fabrics for use in ceramic matrix composites.

Binders can be used in the manufacture of ceramic matrix composites (CMCs) to stabilize fiber build materials for cutting, kitting, and handling operations. Binders also help bind together fiber layers during lay-up. Stabilization and binding of fiber build materials help the preform maintain the desired shape and withstand subsequent processing. Additionally, it can be beneficial to form a weak interfacial coating in the preform to give the final composite enhanced toughness and crack deflection. Thus, a binder that both acts as a binder and forms an interfacial coating is desirable.

### SUMMARY

From one aspect, there is provided a method of forming a ceramic matrix composite that includes applying a binder comprising water and 5% to 15% polyvinyl alcohol to a ceramic material and decomposing the binder to leave behind a discontinuous carbon layer within the ceramic material. The step of applying the binder includes one of a spraying, pipetting, painting, immersing, and pre-pregging technique.

There is also provided a ceramic material that includes woven or braided ceramic tows and a binder applied to the tows, the binder comprising water and 5% to 15% polyvinyl alcohol.

There is also provided a ceramic preform that includes a plurality of ceramic subcomponents arranged in a layer-by-layer fashion. The plurality of ceramic subcomponents is formed from ceramic tows, each of which includes a plurality of filaments, and a carbon layer on a surface of at least a subset of the plurality of filaments.

### BRIEF DESCRIPTION OF THE DRAWINGS

FIG. 1 is a flowchart illustrating a method of forming a CMC component from a ceramic sheet treated with a binder.
FIG. 2 is a simplified cross-sectional view of a ceramic tow showing interfacial layers coating individual filaments.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

This disclosure presents a method of forming a CMC component from fibrous ceramic materials treated with a binder. The binder includes a mixture of a polymer resin and a solvent. The binder can further be decomposed to form an interfacial layer within treated materials.

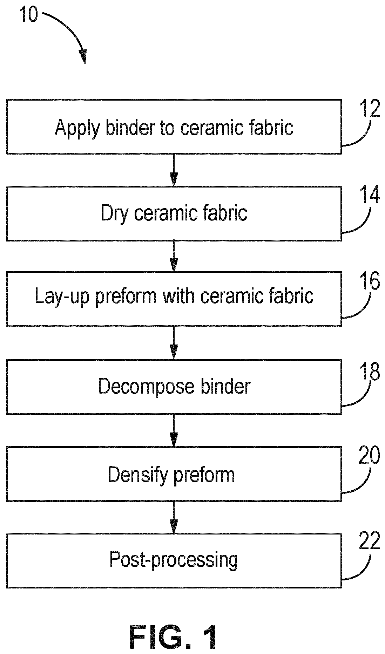

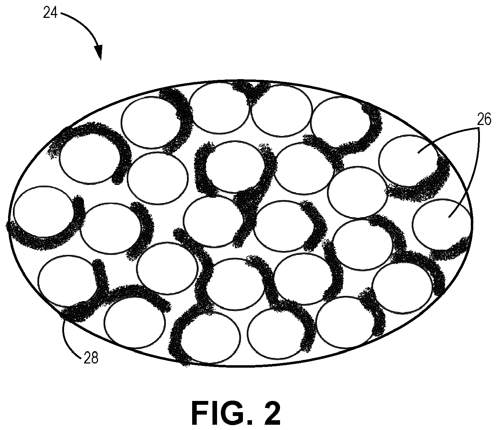

FIG. 1 is a flowchart illustrating method 10 of forming a CMC component with ceramic material (e.g., a fabric or braid) treated with a binder. At step 12, the binder can be applied to the ceramic material, which in an exemplary embodiment, is a fabric. The ceramic fabric can be a sheet of dry woven ceramic fabric formed from tows (shown and labeled in FIG. 2) of bundled filaments of silicon carbide (e.g., Hi-Nicalon^{™} Type S) or other suitable ceramics in various woven architectures. Woven architectures can include satin weaves (e.g., 3, 4, 5, 8-harness, etc.) as well as other woven architectures (e.g., plain, twill, bias, etc.). The woven fabric can further have an ends-per-inch (EPI) or picks-per-inch (PPI) value ranging from 10 to 22. In an alternative embodiment, the ceramic fabric can be a biaxial or triaxial braid. The binder can be a resin-solvent mixture of polyvinyl alcohol (PVA) and water. The amount of PVA in the binder can range from 5% to 15%, and in an exemplary embodiment, can be 9% to 11%. As used herein, the percentage of PVA should be understood as a percentage by weight (wt%). Water can make up the remainder of the mixture. Various techniques can be used to apply the binder to the ceramic material, such as spraying, dipping, pipetting, dabbing, and submersion in a bath of the binder. The binder can be applied such that it reaches the individual filaments of the tows. Depending on the amount of PVA in the binder, as well as the type and extent of the application, the wt% of PVA in the fabric, as applied, can range from 2% to 10%. In an alternative embodiment, the dry woven fabric can be impregnated with the PVA binder to form a pre-preg. Supplemental binder can be applied to the pre-preg, if desired, in any manner discussed above.

At step 14, ceramic fabric with applied binder can be dried, for example, by heating, vacuum, or other suitable means. Drying causes most of the water to evaporate and facilitates subsequent handling and processing of the fabric.

At step 16, the ceramic fabric can be incorporated into a preform. This can include laying up plies from a sheet of fabric and/or braided components (e.g., tubes). The preform can include only binder-treated fabric, or a mixture of binder-treated and non-binder treated fabric. The binder remaining on and within the fabric during preforming stabilizes the various fabric layers/structures and allows the preform to maintain its shape. In some cases, it can be desirable to apply additional amounts of the binder during step 16 using any of the techniques described above. The binder can be broadly or selectively applied, for example, to areas requiring additional tack to become or remain adhered to another structure and/or to retain a certain shape during preforming.

At step 18, the remaining binder (predominantly PVA at this stage) within the preform can be decomposed. In an exemplary embodiment, step 18 involves thermal decomposition carried out by placing the preform in an inert environment and exposing the preform to temperatures ranging from 800°F (426.7°C) to 1150°F (621.1°C). The inert environment can be predominantly nitrogen (N₂) gas, or a mixture of nitrogen (N₂) and hydrogen (H₂) gases. Decomposition can be carried out until only a small amount of PVA ash remains, forming a carbon interfacial layer, discussed in greater detail below with respect to FIG. 2. In one embodiment, decomposition is performed *in situ* such that it is carried out in the reactor chamber used in and just prior to step 20.

At step 20, the preform can undergo matrix formation and densification using one or a combination of chemical vapor infiltration or chemical vapor deposition (CVI or CVD). During densification, the preform layers are infiltrated by reactant vapors, and a gaseous precursor deposits on the underlying fibers. The matrix material can be a silicon carbide or other suitable ceramic material. Densification is carried out until the resulting CMC has reached the desired residual porosity. In most cases, the extent of the matrix is such that it is disposed at least partially around and throughout the ceramic tows of the preform to achieve the desired final porosity of the particular component. In an alternative embodiment, densification can include other methodologies including, but not limited to, melt infiltration and polymer infiltration and pyrolysis (PIP).

At step 22, various post-processing steps can be performed, such as the application of one or more protective coatings (e.g., environmental and/or thermal barrier coatings). A bond coat can also be applied to facilitate bonding between the CMC and a protective coating. Other protective coatings, especially those suitable for use in a gas turbine engine environment, are contemplated herein.

FIG. 2 is a simplified cross-sectional view through tow 24 belonging to the ceramic fabric (or braid), showing filaments 26 and a discontinuous interfacial layer (shown as discrete interfacial layers 28) deposited on some portions of a subset of filaments 26. For simplicity, relatively fewer filaments are shown compared to the standard count of roughly 500 filaments per tow 24. Interfacial layers 28 represent an amount residual carbon coating surfaces of filaments 26 after the decomposition of the binder at step 18. The number of filaments 26 coated and/or extent to which an individual filament 26 is coated can depend on such factors as degree of saturation of the fabric with the binder, the duration and/or intensity of decomposition, etc. In most cases, implementation of method 10 can result in some amount of the discontinuous interfacial layer depositing on at least a subset of filaments 26 within a tow 24. Interfacial layers 28 impart improved mechanical properties to the final composite, such as improve toughness and crack deflection, and reduced fiber debonding.

A CMC component formed with the disclosed ceramic materials can be incorporated into aerospace, maritime, or industrial equipment, to name a few, non-limiting examples.

### Discussion of Possible Embodiments

The following are non-exclusive descriptions of possible embodiments of the present invention.

A method of forming a ceramic matrix composite includes applying a binder comprising water and 5% to 15% polyvinyl alcohol to a ceramic material and decomposing the binder to leave behind a discontinuous carbon layer within the ceramic material. The step of applying the binder includes one of a spraying, pipetting, painting, immersing, and pre-pregging technique.

The method of the preceding paragraph can optionally include, additionally and/or alternatively, any one or more of the following features, configurations and/or additional components:
The above method can further include drying the ceramic material after applying the binder, and incorporating the ceramic material into a preform.

In any of the above methods, the ceramic material can be a woven ceramic fabric and incorporating the ceramic fabric into a preform can include forming a plurality of plies from the woven ceramic fabric and laying up the plurality of plies.

In any of the above methods, the ceramic fabric can be a braid.

Any of the above methods can further include additionally applying the binder to the preform.

In any of the above methods, the step of drying the ceramic material can evaporate the water of the binder.

In any of the above methods, the step of decomposing the binder can include heating the preform to a temperature ranging from 800°F (426.7°C) to 1150°F (621.1°C) in an inert environment.

In any of the above methods, the step of decomposing the binder can create a carbon interfacial layer on filaments of tows of the ceramic fabric.

Any of the above methods can further include densifying the preform using one or a combination of chemical vapor infiltration, chemical vapor deposition, polymer infiltration and pyrolysis, and melt infiltration.

In any of the above methods, the binder can include 9% to 11% polyvinyl alcohol.

In any of the above methods, an as-applied amount of polyvinyl alcohol on the ceramic material can range from 2% to 10%.

A ceramic material includes woven or braided ceramic tows and a binder applied to the tows, the binder comprising water and 5% to 15% polyvinyl alcohol.

The ceramic material of the preceding paragraph can optionally include, additionally and/or alternatively, any one or more of the following features, configurations and/or additional components:
In the above ceramic material, the ceramic tows can be formed from silicon carbide.

In any of the above ceramic materials, the binder can include 9% to 11% polyvinyl alcohol.

In any of the above ceramic materials, an as-applied amount of polyvinyl alcohol on the ceramic material can range from 2% to 10%.

A ceramic preform includes a plurality of ceramic subcomponents arranged in a layer-by-layer fashion. The plurality of ceramic subcomponents is formed from ceramic tows, each of which includes a plurality of filaments, and a carbon layer on a surface of at least a subset of the plurality of filaments.

The preform of the preceding paragraph can optionally include, additionally and/or alternatively, any one or more of the following features, configurations and/or additional components:
In the above preform, the plurality of ceramic subcomponents can include one or a combination of plies and braids.

In any of the above preforms, the ceramic tows can be formed from silicon carbide.

A ceramic matrix composite component can include any of the above preforms and a ceramic matrix at least partially disposed around and throughout the ceramic tows.

In the above component, the ceramic matrix can include silicon carbide.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of forming a ceramic matrix composite, the method comprising:
applying a binder to a ceramic material, the binder comprising water and 5% to 15% polyvinyl alcohol; and
decomposing the binder to leave behind a discontinuous carbon layer within the ceramic material;
wherein the step of applying the binder comprises one of a spraying, pipetting, painting, immersing, and pre-pregging technique.

2. The method of claim 1 and further comprising:
drying the ceramic material after applying the binder; and
forming a preform with the ceramic material.

3. The method of claim 2, wherein the ceramic material is a woven ceramic fabric and wherein incorporating the ceramic fabric into a preform comprises forming a plurality of plies from the woven ceramic fabric and laying up the plurality of plies; and/or wherein the ceramic material is a braid.

4. The method of claim 2 or 3 and further comprising: additionally applying the binder to the preform.

5. The method of any of claims 2 to 4, wherein the step of drying the ceramic material evaporates the water of the binder.

6. The method of any preceding claim, wherein the step of decomposing the binder comprises heating a or the preform to a temperature ranging from 800°F (426.7°C) to 1150°F (621.1°C) in an inert environment.

7. The method of any preceding claim, wherein the step of decomposing the binder creates a carbon interfacial layer (28) on filaments (26) of tows (24) of the ceramic fabric.

8. The method of any preceding claim and further comprising: densifying a or the preform using one or a combination of chemical vapor infiltration, chemical vapor deposition, polymer infiltration and pyrolysis, and melt infiltration.

9. A ceramic material comprising:
woven or braided ceramic tows (24); and
a binder applied to the tows (24), the binder comprising water and 5% to 15% polyvinyl alcohol.

10. The method of any of claims 1 to 8 or the ceramic material of claim 9, wherein the binder comprises 9% to 11% polyvinyl alcohol.

11. The method of any of claims 1 to 8 or the ceramic material of claim 9 or 10, wherein an as-applied amount of polyvinyl alcohol on the ceramic material ranges from 2% to 10%.

12. A ceramic preform comprising:
a plurality of ceramic subcomponents arranged in a layer-by-layer fashion, the plurality of ceramic subcomponents being formed from ceramic tows (24), each of the ceramic tows (24) comprising:
a plurality of filaments (26); and
a carbon layer (28) on a surface of at least a subset of the plurality of filaments (26).

13. The preform of claim 12, wherein the plurality of ceramic subcomponents comprises one or a combination of plies and braids.

14. The ceramic material of any of claims 9 to 11 or preform of claim 12 or 13, wherein the ceramic tows (24) are formed from silicon carbide.

15. A ceramic matrix composite component comprising:
the preform of any of claims 12 to 14; and
a ceramic matrix at least partially disposed around and throughout the ceramic tows (24), wherein the ceramic matrix optionally comprises silicon carbide.
